Europäisches Patentamt

European Patent Office

Office européen des brevets

(19)

(11) Veröffentlichungsnummer : **0 030 628**
**B1**

(12) **EUROPÄISCHE PATENTSCHRIFT**

(45) Veröffentlichungstag der Patentschrift :
11.10.89

(21) Anmeldenummer : 80107062.4

(22) Anmeldetag : 14.11.80

(51) Int. Cl.⁴ : **H 04 L 1/00, H 03 M 13/00, H 03 M 9/00**

(54) Einrichtung zum seriellen Übertragen parallel vorliegender Datenwörter unter Verwendung eines Parallel-Serienumsetzers.

(30) Priorität : 12.12.79 DE 2950002

(43) Veröffentlichungstag der Anmeldung :
24.06.81 Patentblatt 81/25

(45) Bekanntmachung des Hinweises auf die Patenterteilung : 11.10.89 Patentblatt 89/41

(84) Benannte Vertragsstaaten :
AT CH LI NL

(56) Entgegenhaltungen :
DE--A-- 1 549 519
DE--A-- 2 432 400
DE--B-- 2 605 619
GB--A-- 1 269 089

(73) Patentinhaber : Siemens Aktiengesellschaft
Wittelsbacherplatz 2
D-8000 München 2 (DE)

(72) Erfinder : Günther, Rudolf, Dipl.-Ing.
Ackerweg 25
D-3300 Braunschweig (DE)

## Beschreibung

Die Erfindung bezieht sich auf eine Einrichtung nach dem Oberbegriff des Patentanspruches 1.

Es ist bekannt, auf dem Weg von einer Datenquelle zu einer Datensenke aufgetretene Datenverfälschungen dadurch zu erkennen, daß man den zu übertragenden Daten zusätzliche Prüfdaten zuordnet und empfangsseitig prüft, ob diese Zuordnung noch vorhanden ist. So beschreibt z. B. die DE-A-15 49 519 ein Verfahren zur Datensicherung mit Hilfe sogenannter Parity-Bits. Hierbei wird sendeseitig die Anzahl der zu übertragenden Bits einer gegebenen Wertigkeit (H oder L) entweder auf eine gerade oder eine ungerade Zahl ergänzt. Empfangsseitig wird aus der eigentlichen Nutzinformation nach den gleichen Gesetzmäßigkeiten das oder die der empfangenen Information zugeordneten Parity-Bits gebildet und mit den übertragenen Bits verglichen. Nur bei Übereinstimmung der übermittelten mit den selbst ermittelten Parity-Bits wird die übermittelte Nutzinformation anerkannt, andernfalls verworfen.

Dieses bekannte Verfahren zur Datensicherung gestattet das Aufdecken solcher Übertragungsfehler, die sich auf die Daten selbst beziehen. Für das Bilden und das Ableiten der jeweiligen Parity-Bits ist ein gewisser Aufwand an hard- und software erforderlich, der um so größer ist, je komfortabler die Prüfdaten sind, d. h. je sicherer eine Anlage gegen das unerkannte Auftreten von Übertragungsfehlern ist; auch ist ein gewisser Zeitaufwand für das zweimalige Generieren von Prüfdaten erforderlich.

Aufgabe der Erfindung ist es, Fehler im Datenfluß zwischen einer Quelle und einer Senke senkeseitig mit einem Minimum an Aufwand sicher erkennbar zu machen.

Diese Aufgabe wird bei einer Einrichtung der vorgenannten Gattung durch die kennzeichnenden Merkmale des Patentanspruches 1 gelöst.

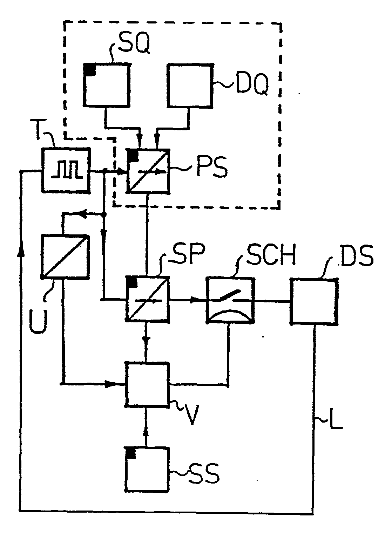

Ein Ausführungsbeispiel der Erfindung ist in der Zeichnung dargestellt und wird im folgenden näher erläutert.

Die Darstellung zeigt eine einem durch gestrichelte Linien angedeuteten ersten Ort zugeordnete Datenquelle DQ, wobei von dieser generierte Datenwörter vorgegebener Länge parallel einem als Schieberegister ausgebildeten Parallel-Serien-Umsetzer PS zugeführt werden. Dieser wird ferner mit parallelen Kontrollwörtern eines quellenseitigen Speichers SQ gespeist.

Die im weiteren einzuführenden Schaltungselemente sind einem zweiten Ort zugeordnet, an dem sich eine Datensenke DS befindet.

Gesteuert durch einen Taktgeber T wird jedes Datenwort und jeweils unmittelbar im Anschluß an dieses das Kontrollwort einem ebenfalls als Schieberegister ausgebildeten Serien-Parallel-Umsetzer zugeführt. Auch dieser wird vom Taktgeber T zyklisch gesteuert. Jeweils nach einer Anzahl von Takten, die der summierten Stellenzahl eines Datenwortes und des Kontrollwortes entspricht, wird über einen Umsetzer U ein sicherer Vergleicher V wirksamgeschaltet. Dieser vergleicht das im Serien-Parralel-Umsetzer SP parallel anstehende Kontrollwort mit dem vorgegebenen Kontrollwort, das auch in einem senkeseitigen Speicher SS gespeichert ist. Sofern das vorgegebene und das anstehende Kontrollwort übereinstimmen, wird das im Serien-Parallel-Umsetzer SP anstehende Datenwort über einen von der Vergleichseinrichtung V betätigbaren Schalter SCH an die Datensenke DS weitergeleitet.

Sofern die Datenwörter der Datenquelle DQ nur auf Anforderung der Datensenke DS übertragen werden sollen, weil diese beispielsweise mit einer Vielzahl weiterer Datenquellen kommuniziert, kann jeder Zyklus des Taktgebers T über eine Leitung L ausgelöst werden.

## Patentansprüche

1. Einrichtung zum empfangsseitigen Erkennen von Übertragungsfehlern bei der seriellen Übertragung von in einer Datenquelle parallel vorliegenden Datenwörtern vorgegebener Länge an eine Datensenke, unter Verwendung eines taktgesteuerten Parallel/Serien-Wandlers am Ort der Datenquelle und eines ebenfalls taktgesteuerten Serien/Parallel-Wandlers am Ort der Datensenke, über die der Datensenke die Datenwörter und jeweils unmittelbar im Anschluß an jedes Datenwort ein Kontrollkennzeichen zugeführt werden, das senkeseitig mit einem dort bekannten Kontrollkennzeichen verglichen wird, wobei nur bei Übereinstimmung zwischen dem zugeführten und dem bekannten Kontrollkennzeichen das jeweils übermittelte Datenwort an die Datensenke weiterleitbar ist, dadurch gekennzeichnet, daß sowohl am Ort der Datenquelle (DQ) als auch am Ort der Datensenke (DS) Speicher (SQ, SS) für ein vorgegebenes, der Datensenke fest zugeordnetes Kontrollwort vorgesehen sind, von denen der quellenseitige Speicher (SQ) ausgangsseitig auf den Eingang des Parallel/Serien-Wandlers (PS) und der senkeseitige Speicher (SS) ausgangsseitig auf den einen Eingang eines sicheren Vergleichers (V) geführt ist, daß der andere Eingang des sicheren Vergleichers (V) auf den Ausgang des Serien/Parallel-Wandlers (SP) geführt ist und daß zur Taktsteuerung ein Taktgeber (T) vorgesehen ist, der über einen Umsetzer (U) zum Zählen der Takte jeweils nach einer Anzahl von Takten, die der summierten Stellenzahl jeweils eines Daten- und des Kontrollwortes entspricht, den sicheren Vergleicher (V) wirksam schaltet.

2. Einrichtung nach Anspruch 1, dadurch gekennzeichnet, daß der Taktgeber (T) von der Datensenke (DS) her zur Ausgabe einer Zahl von Takten anschaltbar ist, die der Anzahl der für die Übertragung eines Daten- und eines Kontrollwortes erforderlichen Zahl von Takten entspricht.

## Claims

1. Device for the receive-side detection of transmission errors during the serial transmission of data words of a given length existing in parallel in a data source to a data sink, employing a clock-controlled parallel-series converter at the location of the data source and a likewise clock-controlled series-parallel converter at the location of the data sink, via which the data words and in each case immediately following each data word a check character are sent to the data sink, which check character is compared with a control character known there, it being possible for the data word transmitted in each case to be forwarded to the data sink only if there is agreement between the check character sent and the one known, characterized in that there are provided both at the location of the data source (DQ) and at the location of the data sink (DS) memories (SQ, SS) for a predetermined check word firmly assigned to the data sink, of which the source-side memory (SQ) is connected on the output side to the input of the parallel-series converter (PS) and the sink-side memory (SS) is connected on the output side to one input of a reliable comparator (V), in that the other input of the reliable comparator (V) is connected to the output of the series-parallel converter (SP), and in that there is provided for timing control a clock generator (T) which activates the reliable comparator (V) via a converter (U) for counting the clock pulses in each case after a number of clock pulses which correspond to the summed number of positions in each case of a data word and of the check word.

2. Device according to Claim 1, characterized in that the clock generator (T) can be switched on by the data sink (DS) for outputting a number of clock pulses which corresponds to the quantity of the number of clock pulses required for the transmission of a data word and of a check word.

## Revendications

1. Installation pour identifier, côté sortie, des erreurs de transmission lors de la transmission sérielle de mots de données d'une longueur prédéterminée qui sont présents en parallèle dans une source de données, à un collecteur de données, avec mise en œuvre d'un convertisseur parallèle/série situé à l'emplacement de la source de données et commandé par des impulsions d'horloge et d'un convertisseur série/parallèle situé à l'emplacement du collecteur de données et également commandé par des impulsions d'horloge, et par l'intermédiaire desquels on transmet au collecteur de données les mots de données et respectivement et directement, à la suite de chaque mot de données, un signe caractéristique de contrôle qui, côté collecteur, est comparé avec un signe caractéristique de contrôle qui y est connu, le mot de données n'étant susceptible d'être transmis au collecteur de données qu'en cas de coïncidence entre le signe caractéristique appliqué et le signe caractéristique connu, caractérisée par le fait qu'aussi bien à l'emplacement de la source de données (DQ) qu'à l'emplacement du collecteur de données (DS) sont prévues des mémoires (SQ, SS) pour un mot de contrôle prédéterminé et associé de façon fixe au collecteur de données, la mémoire (SQ) située côté source étant reliée par sa sortie à l'entrée du convertisseur parallèle/série (PS) et la mémoire (SS) située côté collecteur étant reliée par sa sortie à une première entrée d'un comparateur de sécurité, que l'autre entrée du comparateur de sécurité (V) est reliée à la sortie du convertisseur série/parallèle (SP), et que pour la commande des impulsions d'horloge il est prévu un générateur de cadence (T) qui par l'intermédiaire d'un convertisseur (U) commute le comparateur de sécurité (V) dans son état actif pour compter les cadences après un nombre de cadences qui correspond au nombre de chiffres sommé d'un mot de données et du mot de contrôle.

2. Installation selon la revendication 1, caractérisée par le fait que le générateur de cadence (T) est susceptible d'être relié au collecteur de données (DS) pour émettre un nombre de cadences qui correspond au nombre de cadences qui est nécessaire pour la transmission d'un mot de données et d'un mot de contrôle.